# FASCICULE DE BREVET EUROPEEN

(11) **EP 2 820 795 B1**
(45) Date de publication et mention de la délivrance du brevet: **28.11.2018**
(21) Numéro de dépôt: 13706600.7
(22) Date de dépôt: 31.01.2013
(51) Int. Cl.: H04L 9/32, H04L 29/06, H04W 12/06

(54) **PROCEDE DE VERIFICATION D'IDENTITE D'UN UTILISATEUR D'UN TERMINAL COMMUNIQUANT ET SYSTEME ASSOCIE**
VERFAHREN ZUR VERIFIZIERUNG DER IDENTITÄT EINES BENUTZERS EINES KOMMUNIKATIONSTERMINAL UND DAZUGEHÖRENDES SYSTEM
METHOD FOR VERIFYING THE IDENTITY OF A USER OF A COMMUNICATION TERMINAL AND ASSOCIATED SYSTEM

(30) Priorité: 27.02.2012 FR 1251753
(43) Date de publication de la demande: 07.01.2015
(73) Titulaire: Idemia Identity & Security France, 92130 Issy-les-Moulineaux (FR)
(72) Inventeur: BERTEAU, Guillaume, F-92130 Issy-les-Moulineaux (FR); BENTEO, Bruno, F-92130 Issy-les-Moulineaux (FR)
(74) Mandataire: Cabinet Plasseraud
(86) Numéro de dépôt international: PCT/FR2013/050197
(87) Numéro de publication internationale: WO 2013/128091

(56) Documents cités:
- EP-A1- 2 323 308
- "Chapter 10: Identification and Entity Authentication ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , 1 octobre 1996 (1996-10-01), XP001525010, ISBN: 978-0-8493-8523-0 Extrait de l'Internet: URL:http://www.cacr.math.uwaterloo.ca/hac/
- DOMINIKUS S ET AL: "mCoupons: An Application for Near Field Communication (NFC)", ADVANCED INFORMATION NETWORKING AND APPLICATIONS WORKSHOPS, 2007, AINAW '07. 21ST INTERNATIONAL CONFERENCE ON, IEEE, PISCATAWAY, NJ, USA, 21 mai 2007 (2007-05-21), pages 421-428, XP031334719, ISBN: 978-0-7695-2847-2
- MIHIR BELLARE ET AL: "Security Proofs for Identity-Based Identification and Signature Schemes", JOURNAL OF CRYPTOLOGY, SPRINGER-VERLAG, NE, vol. 22, no. 1, 22 août 2008 (2008-08-22), pages 1-61, XP019699801, ISSN: 1432-1378
- BEN DODSON ET AL: "Secure, Consumer-Friendly Web Authentication and Payments with a Phone", LECTURE NOTES OF THE INSTITUTE FOR COMPUTER SCIENCES, SOCIAL INFORMATICS AND TELECOMMUNICATIONS ENGINEERING; [LECTURE NOTES OF THE INSTITUTE FOR COMPUTER SCIENCES, SOCIAL INFORMATICS AND TELECOMMUNICATIONS ENGINEERING], SPRINGER, DE, vol. 76, 1 January 2012 (2012-01-01), pages 17-38, XP009173441, ISSN: 1867-8211 ISBN: 978-3-642-17758-3
- BRYAN PARNO ET AL: "Phoolproof Phishing Prevention", 1 January 2006 (2006-01-01), FINANCIAL CRYPTOGRAPHY AND DATA SECURITY LECTURE NOTES IN COMPUTER SCIENCE;;LNCS, SPRINGER, BERLIN, DE, PAGE(S) 1 - 19, XP019045528, ISBN: 978-3-540-46255-2

## Description

La présente invention concerne le conditionnement d'accès et/ou la souscription à un service par vérification d'identité d'un utilisateur, à partir d'un terminal communicant (notamment un terminal mobile) de l'utilisateur.

La notion d'identité devient omniprésente et quotidienne dans l'environnement dit « mobile ». Cette identité numérique doit être cependant protégée contre toute forme d'usurpation en restant ergonomique dans son utilisation par son porteur.

Les solutions connues (à mot de passe unique ou « OTP » pour « One Time Password », ou à signature unique OTS ou SSO (pour Single Signe On), ou par SMS (Short Message Service), ou normalisées « Open ID », ou autres), toutes basées sur des processus de type « login/mot de passe » ou identifiants réseau (numéro de téléphone par exemple) associés à une gestion d'attributs de l'utilisateur, ne sont pas pleinement satisfaisantes.

Le document EP 2 323 308 divulgue un procédé d'assignation d'un secret à un jeton, comprenant la réception d'une première donnée biométrique d'une caractéristique biométrique d'une personne, le stockage de la première donnée biométrique dans le jeton de sécurité, le stockage d'un secret non-crypté dans le jeton de sécurité, l'encryptage biométrique du secret au moyen de la première donnée biométrique, et le stockage du secret crypté dans le jeton de sécurité.

Le document « Chapter 10 : Identification and Entity Authentication ED », Menezes A J ; Van Oorschot P C ; Vanstone S A, Handbook of applied cryptography, pages 385 à 424, divulgue des techniques permettant à une partie de s'assurer que l'identité d'une autre partie correspond bien à ce qu'elle a déclaré.

Le document « mCoupons : An Application for Near Field Communication (NFC) », Advanced Information Networking And Applications Workshops, 21 mai 2007, pages 421-428, sections 5.5 et 5.6, divulgue une méthode d'authentification d'un utilisateur par l'utilisation d'une paire de clés secrète/publique.

L'invention propose une solution. L'invention propose notamment un procédé de vérification d'identité d'un utilisateur d'un terminal communicant, comportant les étapes selon la revendication indépendante 1.

Un terminal communicant (téléphone, tablette, smartphone) devient ainsi, s'il est associé à une identité dérivée issue d'un titre authentique, un support connecté facilitant la validation des droits (par authentification forte notamment) et le partage de données de sécurité avec les acteurs locaux ou distants d'une transaction.

Selon les modes de réalisation, le procédé de l'invention peut présenter une ou plusieurs des caractéristiques suivantes :
- le chiffrement utilise une infrastructure à clé publique, la donnée d'identité dérivée au moins étant utilisée pour générer une clé de chiffrement ;
- la donnée d'identité dérivée est un certificat numérique certifiant le chiffrement par le terminal ;
- en cas de vérification positive, le jeton chiffré est lié à un certificat numérique d'identification de l'utilisateur ;
- la communication au serveur de la première donnée d'identité de l'utilisateur est autorisée après vérification d'une donnée biométrique de l'utilisateur du terminal ;
- l'étape courante comporte une vérification d'une donnée propre à l'utilisateur avant d'initier sur le terminal l'utilisation de la deuxième donnée pour le chiffrement du jeton ;
- on prévoit une pluralité d'étapes préalables avec une pluralité de communications à une pluralité de serveurs de la première donnée d'identité de l'utilisateur, chaque serveur générant des deuxièmes données respectives d'identité de l'utilisateur, chaque deuxième donnée définissant une identité dérivée de l'utilisateur, chaque identité dérivée étant propre à un service dont l'accès est conditionné par une vérification de jeton chiffré auprès d'un serveur dédié audit service ;
- la communication au serveur de la première donnée d'identité est effectuée via un lecteur comportant un module de communication de courte portée ou filaire, et, le terminal comportant un module homologue de communication de courte portée ou filaire, la deuxième donnée est transmise du serveur au lecteur, puis du lecteur au terminal par communication en courte portée ou filaire ;
- la transmission du jeton à chiffrer et/ou du jeton chiffré, entre le serveur et le terminal, est effectuée via un équipement sollicitant un accès à un service auquel le serveur est associé, l'accès au service étant conditionné par une vérification de l'identité de l'utilisateur à partir du terminal de l'utilisateur à ladite étape courante ;
- la transmission du jeton à chiffrer et/ou du jeton chiffré, entre le terminal et l'équipement, est effectuée par une communication de courte portée ou filaire, le terminal comportant un module de communication de courte portée ou filaire et l'équipement comportant un module homologue de communication de courte portée ou filaire ;
- la transmission du jeton à chiffrer du serveur au terminal est effectuée par un réseau mobile, et la transmission du jeton chiffré du terminal au serveur est effectuée via un équipement sollicitant un accès à un service auquel le serveur est associé, l'accès au service étant conditionné par une vérification de l'identité de l'utilisateur à partir du terminal de l'utilisateur à ladite étape courante ;
- la transmission du jeton à chiffrer du serveur au terminal est effectuée via un équipement sollicitant un accès à un service auquel le serveur est associé, et la transmission du jeton chiffré du terminal au serveur est effectuée par un réseau mobile, l'accès au service étant conditionné par une vérification de l'identité de l'utilisateur à partir du terminal de l'utilisateur à ladite étape courante.

L'invention concerne aussi un système de vérification d'identité d'un utilisateur, comportant au moins un terminal et un serveur pour la mise en oeuvre du procédé selon l'invention.

D'autres caractéristiques et avantages de l'invention apparaîtront à la lecture de la description détaillée ci-après présentant des exemples possibles de réalisation, et à l'examen des dessins annexés sur lesquels :
- la figure 1 illustre les principales opérations mises en oeuvre par un système au sens de l'invention, pendant l'étape préalable de déclaration du terminal ; et
- la figure 2 illustre les principales opérations mises en oeuvre par un système au sens de la présente invention, pendant une étape courante de vérification d'identité, basée sur le terminal.

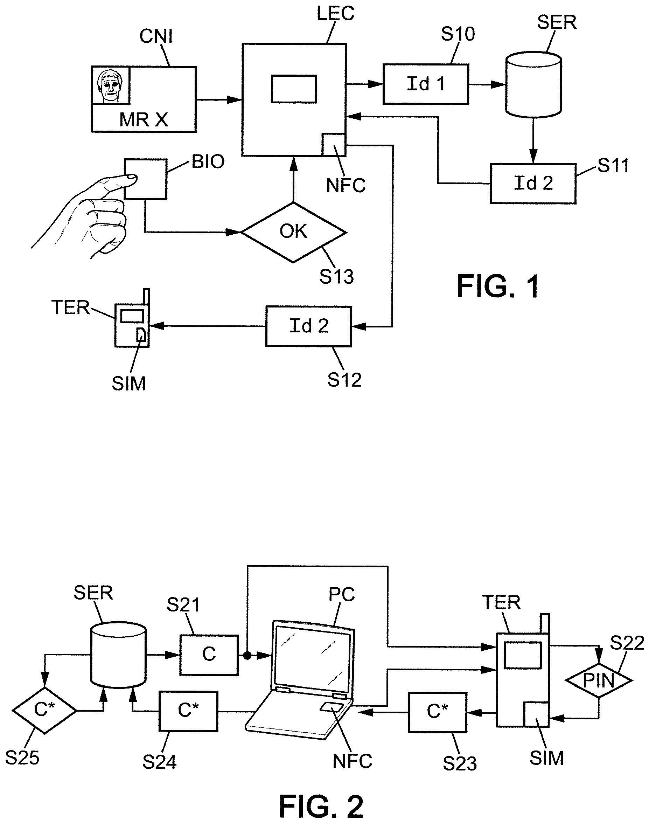

En référence à la figure 1, un utilisateur présente un support physique tel que, par exemple, une carte nationale d'identité CNI, une carte de fidélité, une carte d'étudiant, ou autre, pour lecture par un lecteur LEC. Pour vérifier que ce support CNI est bien porté par son détenteur (« MR X »), l'utilisateur présente une donnée biométrique, par exemple une empreinte digitale, dans un lecteur BIO relié au lecteur LEC de la carte CNI. Dans un exemple de réalisation possible, le lecteur lit (par exemple par scan) les données de la carte CNI et les communique, avec les données biométriques, par exemple à un serveur distant. Ce serveur distant vérifie une coïncidence entre les données de la carte CNI et les données biométriques relevées (validation du test S13) et le cas échéant le procédé peut se poursuivre. Dans un autre exemple de réalisation possible, les données biométriques peuvent servir à protéger certaines données embarquées sur le support physique ; les données biométriques sont alors transmises au support qui effectue une vérification locale (par exemple via du « Match On Card ») et autorise l'exploitation desdites données protégées.

Suite à cette première opération, le lecteur peut communiquer à l'étape S10 une première donnée d'identité de l'utilisateur Id1 vers un serveur distant SER. Cette identité Id1 peut être par exemple une identité régalienne de l'individu, ou encore une identité bancaire (dans le cas où la carte CNI est une carte bancaire), ou autres. La première donnée d'identité Id1 peut également être un certificat numérique transmis au serveur distant SER qui vérifie la validité de ce certificat (chaine de certification, état de révocation, date de validité, ...).

Dans un mode de réalisation, le serveur distant SER détermine, à partir de la première donnée d'identité Id1, une identité dérivée Id2, à l'étape S11 (par exemple par application d'une fonction de hachage à la donnée Id1), et communique une deuxième donnée de cette identité dérivée Id2 au lecteur LEC dans l'exemple représenté. Dans une forme de réalisation, le lecteur LEC peut comporter des moyens de communication de courte portée (par exemple un module NFC, pour « Near Field Communication », ou encore une communication Wifi, Bluetooth, ou filaire (par câble USB par exemple)), pour transmettre la deuxième donnée d'identité dérivée Id2 à un terminal communiquant TER du choix de l'utilisateur, à l'étape S12, ce terminal TER étant bien entendu équipé aussi d'un module de communication de courte portée. En variante, l'identité dérivée Id2 peut être transmise directement du serveur SER au terminal TER par un réseau mobile.

Dans un autre mode de réalisation, l'identité dérivée Id2 peut être un certificat numérique. Un élément sécurisé du terminal communiquant TER génère localement une bi-clé (i.e. un couple clé publique - clé privée), la clé privée étant un secret inextractible de l'élément sécurisé du terminal. La clé publique est alors communiquée au serveur distant SER avec une demande de certification de la bi-clé. Le serveur distant SER génère un certificat lié au titre authentique, i.e. lié à la première donnée d'identité de l'utilisateur Id1. Ce certificat est ensuite renvoyé au terminal communiquant TER à côté de la bi-clé.

Plus particulièrement, le terminal TER de l'utilisateur stocke l'identité dérivée Id2 dans une mémoire sécurisée (par exemple dans la carte SIM, pour « Subscriber Identity Module », ou plus généralement dans un module UICC pour « Universal Integrated Circuit Card », ou encore dans un élément de sécurité quelconque du terminal). A cet effet, une application peut être transmise depuis le serveur et via le lecteur LEC, vers le terminal, comme par exemple une « cardlet » qui s'installe sur le terminal TER pour stocker l'identité dérivée Id2, par exemple selon un procédé de type OTA, pour « Over The Air ».

Selon un mode de réalisation, le terminal TER peut générer une clé ou une bi-clé à partir de la donnée de l'identité dérivée Id2, permettant un chiffrement symétrique (ou respectivement asymétrique, pour une cryptographie asymétrique) intervenant ultérieurement dans la vérification de l'identité de l'utilisateur, à partir de son terminal TER, comme on le verra ci-après en référence à la figure 2.

Selon un autre mode de réalisation, lorsque l'identité dérivée Id2 est un certificat numérique comme décrit plus haut, la bi-clé associé au certificat du titre authentique sera utilisée pour le chiffrement intervenant ultérieurement dans la vérification de l'identité de l'utilisateur à partir de son terminal TER comme décrit en référence à la figure 2.

Dans un exemple de réalisation, illustré à la figure 2, un équipement quelconque, par exemple un ordinateur PC, une borne de service automatique ou autre, communique avec une plateforme de service via un réseau de type Internet. Avant de fournir un service sécurisé, le serveur SER associé à ce service doit vérifier l'identité de l'utilisateur. Ainsi, il est fait recours ici à l'étape précitée de vérification de l'identité de l'utilisateur, à partir de son terminal TER. A cet effet, en référence à la figure 2, le serveur SER envoie, à l'étape S21, un jeton C (i.e. un « challenge » qui peut par exemple correspondre à un aléa ou un « hash » d'un document) par exemple à destination de l'équipement PC. Par communication en champ proche NFC (l'équipement PC étant équipé d'un module NFC), le jeton est communiqué au terminal TER, lequel exploite les données stockées en mémoire sécurisée (par exemple dans sa carte SIM) et ses ressources cryptographiques pour signer ce jeton à l'étape S23. Avantageusement, il peut être mis en oeuvre auprès du terminal TER une procédure systématique consistant en une vérification d'une donnée propre à l'utilisateur, dès lors qu'il s'agit d'utiliser la ou les clé(s) de chiffrement stockée(s) dans le terminal pour générer une signature. Par exemple, il peut être proposé via une interface homme-machine à l'utilisateur de saisir un code personnel à l'étape S22, ou encore de saisir une donnée biométrique prédéterminée (empreinte digitale, iris, ou autres). Ainsi, en cas de détention frauduleuse du terminal TER par un tiers malveillant, aucune signature ne peut être générée à l'étape S23 et bien entendu aucun service ne pourra être fourni ultérieurement à l'ordinateur PC ou à la borne de service.

Le jeton signé C* est retournée à l'étape S24 au serveur SER, par exemple via l'ordinateur PC par une communication en champ proche, via le module NFC notamment. A l'étape S25, le serveur SER vérifie cette signature à l'aide de sa ou ses propre(s) clé(s) et, bien entendu, à l'aide du jeton C qu'il a lui-même initié. La validité de la signature peut comprendre une vérification standard de validité de certificat (chaine de certification, état de révocation, date de validité, ...). Par ailleurs, connaissant le jeton envoyé à l'étape S21, la « réponse » (i.e. le jeton signé par la clé privée du terminal TER) retournée à l'étape S24 ainsi que la clé publique présente dans le certificat, un serveur de validation est capable de contrôler la validité de la signature.

On comprendra alors que cette signature correspond à un certificat numérique identifiant l'utilisateur par rapport au service précité.

L'étape de vérification de l'identité de l'utilisateur décrite en référence à la figure 2 peut être bi-canal, c'est-à-dire par exemple que le jeton C à signer (« challenge » ou « hash » d'un document) peut-être envoyé par le réseau mobile du serveur SER directement sur le terminal communiquant TER, signé par le terminal communiquant, puis le jeton signé C* est renvoyé au serveur via une interface NFC de l'équipement (ordinateur PC ou borne de service automatique). Il est entendu que la communication bi-canal peut également comprendre une communication du jeton C à signer du serveur SER au terminal communiquant TER via une interface NFC de l'équipement (ordinateur PC ou borne de service automatique) et une communication du jeton signé C* renvoyé directement du terminal TER au serveur SER par le réseau mobile.

Dans une réalisation particulière, l'identité dérivée Id2 précitée est calculée par exemple à partir d'une fonction de hachage appliquée à la première donnée d'identité Id1 issue de la lecture de la carte CNI. Ensuite, au moins une clé (ou un couple de clés publique et privée), stockée dans la mémoire sécurisée du terminal TER, peut être calculée à partir de cette identité dérivée Id2 (par exemple la clé privée, dans le cas d'un chiffrement asymétrique). Par ailleurs, une fois que l'identité de l'utilisateur est vérifiée grâce à son terminal, une session peut être établie pour un service sécurisé. Par exemple, une clé diversifiée peut être utilisée ensuite pour les échanges entre l'équipement PC et une plateforme de service reliée au serveur SER.

Bien entendu, la présente invention ne se limite pas à la forme de réalisation décrite ci-avant à titre d'exemple. Elle s'étend à d'autres variantes.

Par exemple, on a décrit ci-avant une interaction avec un lecteur par communication en champ proche. Dans une variante, une communication peut être établie directement entre le terminal TER et le serveur SER, par exemple via un réseau cellulaire, tant pour l'étape préalable de déclaration du terminal que pour l'étape ultérieure de vérification d'identité.

Par ailleurs, on a décrit ci-avant en référence à la figure 2 l'utilisation d'un équipement PC (ou encore d'un lecteur LEC, tel qu'une borne communicante). Dans une variante plus simple, il peut être utilisé directement le terminal TER pour accéder au service (ou pour l'enrôlement initial du terminal) et la vérification de la signature du challenge (ou l'enrôlement) s'effectue directement par une communication entre le serveur et le terminal, sans équipement intermédiaire. Toutefois, l'utilisation d'un appareil communicant (une borne de lecture LEC, un ordinateur PC, une tablette ou encore une télévision) offre avantageusement une interface améliorant l'ergonomie d'utilisation.

Par ailleurs, on a décrit ci-avant une interaction avec un serveur d'application SER. En variante, il peut être prévu de façon équivalente une interaction avec un équipement de type CMS (pour « Card Management System ») ou TSM (pour « Trusted Service Management »).

Ainsi, l'invention propose d'utiliser un (ou plusieurs) élément(s) de sécurité embarqué(s) dans un objet communicant pour embarquer une identité dérivée dont l'évolution (vol, perte, répudiation, etc.) peut être gérée déjà par l'émetteur initial du support CNI et qui permet une validation simple, rapide, sécurisée et anonyme des droits associés.

A cet effet, on prévoit un calcul, suivi d'un transfert de l'identité dérivée via des interfaces (souvent standardisées) des objets communicants, par exemple par des échanges locaux (en champ proche ou NFC pour « Near Field Communication »), ou en variante via Internet (par une liaison WiFi, ou autres), ou encore possiblement via des interfaces utilisateurs de réseaux sociaux (Facebook, Linkedln, voire iTunes ®), ou encore par communication par un réseau cellulaire (3G, LTE ou autres). L'identité dérivée peut ne pas être stockée seule dans la mémoire sécurisée. On peut prévoir une mémorisation dans l'objet communicant d'une application de gestion des relais de requêtes externes transmises selon les mêmes interfaces que pour l'implémentation de l'étape préalable de déclaration du terminal. Avantageusement, une authentification locale des données du porteur peut être prévue (par exemple par saisie de données de biométrie), avant la déclaration du terminal mobile. L'invention permet ensuite une personnalisation des opérations cryptographiques en fonction des demandes ou des services en ligne concernés, avec des créations de signatures numériques spécifiques à chaque service. L'invention permet en outre d'éviter le partage d'informations signifiantes avec les parties concernées par la transaction pendant le service.

Avantageusement, la validation de l'appairage du terminal, du titre authentique et du porteur peut se baser sur 2 ou 3 facteurs (les données du titre authentique - ce que j'ai, un code PIN - ce que je sais, une donnée biométrie - ce que je suis). Après validation des données d'authentification sur 2 ou 3 facteurs du porteur authentique, un enrôlement initial du terminal peut être effectué par utilisation d'un titre authentique CNI, carte de fidélité, carte d'étudiant ou autre. Ainsi, l'introduction de la biométrie/cryptographie dans la génération d'une signature digitale est une réalisation optionnelle mais avantageuse. L'invention permet alors un partage de données non signifiantes avec une vérification auprès de serveurs distants, sans partage d'identité. Elle permet en outre une génération et une communication de certificat et/ou de signature numérique en offrant donc une option d'audit *a posteriori*, et ce, dans des conditions de personnalisation après émission d'applications signées sans besoin d'environnements spécifiques.

Il est assuré ainsi une personnalisation d'applications à forte sensibilité sur la base de l'identification du porteur initial, du fait de la création d'un lien unique entre le porteur authentique et une donnée calculée sur la base d'une information du support initial CNI qui d'ailleurs peut être un produit de sécurité (carte ou système à processeur de sécurité). Ensuite, la création de conditions de génération d'algorithme diversifié sur la base de données produites par le porteur (et non disponibles dans les objets) est aussi un avantage.

## Revendications

1. Procédé de vérification d'identité d'un utilisateur d'un terminal communicant (TER), comportant :
une étape préalable comprenant :
- une communication à au moins un serveur (SER) dédié à un service, d'une première donnée d'identité (Id1) de l'utilisateur (S10), une génération d'une bi-clé, couple clé publique - clé privée, par le terminal,
- une génération auprès du serveur d'une deuxième donnée d'identité (Id2) de l'utilisateur (S11), la deuxième donnée définissant une identité dérivée de l'utilisateur propre audit service, ladite deuxième donnée d'identité étant un certificat numérique liant ladite clé publique à ladite première donnée d'identité, et
- un stockage de la deuxième donnée d'identité (Id2) dans une mémoire sécurisée (SIM) du terminal (S12),
une étape courante de vérification d'identité comprenant :
- une transmission du serveur au terminal d'un jeton (C) à signer (S21) afin d'autoriser ou non un accès au service auquel le serveur est dédié,
- une utilisation auprès du terminal de la clé privée au moins pour signer le jeton (S23), le jeton signé (C*) étant transmis au serveur et vérifié auprès du serveur (S25), et
- en cas de vérification positive du jeton signé auprès du serveur, le serveur valide la vérification d'identité de l'utilisateur du terminal et autorise l'accès au service ;
dans lequel la transmission du jeton (C) à signer et/ou du jeton signé (C*), entre le serveur et le terminal, est effectuée via un équipement (PC) sollicitant un accès au service auquel le serveur (SER) est dédié, l'accès au service étant conditionné par une vérification de l'identité de l'utilisateur à partir du terminal de l'utilisateur à ladite étape courante.

2. Procédé selon la revendication 1, dans lequel, en cas de vérification positive, le jeton signé est lié à un certificat numérique d'identification de l'utilisateur.

3. Procédé selon l'une des revendications précédentes, dans lequel ladite communication au serveur de la première donnée d'identité (Id1) de l'utilisateur est autorisée après vérification d'une donnée biométrique de l'utilisateur du terminal (S13).

4. Procédé selon l'une des revendications précédentes, dans lequel l'étape courante comporte une vérification d'une donnée propre à l'utilisateur (S22) avant d'initier sur le terminal l'utilisation de la deuxième donnée pour le signature du jeton.

5. Procédé selon l'une des revendications précédentes, dans lequel on prévoit une pluralité d'étapes préalables avec une pluralité de communications à une pluralité de serveurs de la première donnée d'identité de l'utilisateur, chaque serveur générant des deuxièmes données respectives d'identité de l'utilisateur, chaque deuxième donnée définissant une identité dérivée de l'utilisateur, chaque identité dérivée étant propre à un service dont l'accès est conditionné par une vérification de jeton signé auprès d'un serveur dédié audit service.

6. Procédé selon l'une des revendications précédentes, dans lequel la communication au serveur (SER) de la première donnée d'identité (Id1) est effectuée via un lecteur (LEC) comportant un module de communication de courte portée (NFC) ou filaire, et, le terminal comportant un module homologue de communication de courte portée ou filaire, la deuxième donnée (Id2) est transmise du serveur au lecteur, puis du lecteur au terminal par communication en courte portée ou filaire.

7. Procédé selon la revendication 1, dans lequel la transmission du jeton (C) à signer et/ou du jeton signé (C*), entre le terminal (TER) et l'équipement (PC), est effectuée par une communication de courte portée (NFC) ou filaire, le terminal (TER) comportant un module de communication de courte portée (NFC) ou filaire et l'équipement (PC) comportant un module homologue de communication de courte portée ou filaire.

8. Procédé selon l'une des revendications 1 à 6, dans lequel la transmission du jeton (C) à signer du serveur (SER) au terminal (TER) est effectuée par un réseau mobile, et la transmission du jeton signé (C*) du terminal au serveur est effectuée via l'équipement (PC) sollicitant l'accès au service auquel le serveur (SER) est associé.

9. Procédé selon l'une des revendications 1 à 6, dans lequel la transmission du jeton (C) à signer du serveur (SER) au terminal (TER) est effectuée via l'équipement (PC) sollicitant un accès au service auquel le serveur (SER) est associé, et la transmission du jeton signé (C*) du terminal au serveur est effectuée par un réseau mobile.

10. Système de vérification d'identité d'un utilisateur, comportant au moins un terminal (TER), un serveur (SER) et pour la mise en oeuvre du procédé selon l'une des revendications précédentes.

## Patentansprüche

1. Verfahren zur Verifizierung der Identität eines Benutzers eines Kommunikationsterminals (TER), umfassend:
- einen Vorabschritt, umfassend:
- Übermitteln einer ersten Identitätsangabe (Id1) des Benutzers an mindestens einen Server (SER), der für einen Dienst bestimmt ist (S10),
- Erzeugen eines Schlüsselpaares, des Paares öffentlicher Schlüssel - privater Schlüssel, durch das Terminal,
- Erzeugen einer zweiten Identitätsangabe (Id2) des Benutzers im Server (S11), wobei die zweite Angabe eine Identität definiert, die von dem Benutzer abgeleitet und für den Dienst spezifisch ist, wobei die zweite Identitätsangabe ein digitales Zertifikat ist, das den öffentlichen Schlüssel mit der ersten Identitätsangabe verknüpft, und
- Speichern der zweiten Identitätsangabe (Id2) in einem gesicherten Speicher (SIM) des Terminals (S12),
- einen Routineschritt zur Verifizierung der Identität, umfassend:
- Übertragen eines zu signierenden Tokens (C) vom Server zum Terminal (S21), um einen Zugriff auf den Dienst, für den der Server bestimmt ist, zu ermöglichen oder nicht,
- Verwenden des privaten Schlüssels bei dem Terminal mindestens zum Signieren des Tokens (S23), wobei der signierte Token (C*) zum Server übertragen und beim Server verifiziert wird (S25), und
- bei einer positiven Verifizierung des signierten Tokens im Server validiert der Server die Identitätsverifizierung des Terminalbenutzers und autorisiert den Zugriff auf den Dienst;
wobei die Übertragung des zu signierenden Tokens (C) und/oder des signierten Tokens (C*) zwischen dem Server und dem Terminal über eine Einrichtung (PC) erfolgt, die einen Zugriff auf den Dienst anfordert, für den der Server (SER) bestimmt ist, wobei der Zugriff auf den Dienst durch eine Verifizierung der Identität des Benutzers ausgehend vom Terminal des Benutzers in dem Routineschritt bedingt wird.

2. Verfahren nach Anspruch 1, wobei bei einer positiven Verifizierung das signierte Token mit einem digitalen Identifikationszertifikat des Benutzers verknüpft wird.

3. Verfahren nach einem der vorhergehenden Ansprüche, wobei das Übermitteln der ersten Identitätsangabe (Id1) des Benutzers an den Server nach Verifizierung einer biometrischen Angabe des Terminalbenutzers (S13) zugelassen wird.

4. Verfahren nach einem der vorhergehenden Ansprüche, wobei der Routineschritt eine Verifizierung einer benutzerspezifischen Angabe umfasst (S22), bevor auf dem Terminal die Verwendung der zweiten Angabe für die Signatur des Tokens auslöst wird.

5. Verfahren nach einem der vorhergehenden Ansprüche, wobei eine Mehrzahl von Vorabschritten mit einer Mehrzahl von Übermittlungen der ersten Identitätsangabe des Benutzers an eine Mehrzahl von Servern vorgesehen ist, wobei jeder Server entsprechende zweite Identitätsangaben des Benutzers erzeugt, wobei jede zweite Angabe eine abgeleitete Identität des Benutzers definiert, wobei jede abgeleitete Identität spezifisch für einen Dienst ist, dessen Zugriff durch eine Verifizierung des signierten Tokens bei einem dem Dienst zugeordneten Server bedingt ist.

6. Verfahren nach einem der vorhergehenden Ansprüche, wobei die Übermittlung der ersten Identitätsangabe (Id1) an den Server (SER) über eine Leseeinrichtung (LEC) erfolgt, die ein Kurzstrecken(NFC)- oder drahtgebundenes Kommunikationsmodul umfasst, und wobei das Terminal ein homologes Kurzstrecken- oder drahtgebundenes Kommunikationsmodul umfasst, und die zweite Angabe (Id2) vom Server an die Leseeinrichtung und dann von der Leseeinrichtung an das Terminal durch Kurzstrecken- oder drahtgebundene Kommunikation übertragen wird.

7. Verfahren nach Anspruch 1, wobei die Übertragung des zu signierenden Tokens (C) und/oder des signierten Tokens (C*) zwischen dem Terminal (TER) und der Einrichtung (PC) durch eine Kurzstrecken(NFC)- oder drahtgebundene Kommunikation durchgeführt wird, wobei das Terminal (TER) ein Kurzstrecken(NFC)- oder drahtgebundenes Kommunikationsmodul umfasst und die Einrichtung (PC) ein entsprechendes Kurzstrecken- oder drahtgebundenes Kommunikationsmodul umfasst.

8. Verfahren nach einem der Ansprüche 1 bis 6, wobei die Übertragung des zu signierenden Tokens (C) vom Server (SER) zum Terminal (TER) durch ein Mobilfunknetz durchgeführt wird und die Übertragung des signierten Tokens (C*) vom Terminal zum Server über die Einrichtung (PC) erfolgt, die den Zugriff auf den Dienst anfordert, dem der Server (SER) zugeordnet ist.

9. Verfahren nach einem der Ansprüche 1 bis 6, wobei die Übertragung des zu signierenden Tokens (C) vom Server (SER) zum Terminal (TER) über die Einrichtung (PC) erfolgt, die den Zugriff auf den Dienst anfordert, dem der Server (SER) zugeordnet ist, und die Übertragung des signierten Tokens (C*) vom Terminal zum Server über ein Mobilfunknetz erfolgt.

10. System zur Verifizierung der Identität eines Benutzers, umfassend mindestens ein Terminal (TER) und einen Server (SER) und geeignet zur Durchführung des Verfahrens gemäß einem der vorhergehenden Ansprüche.

## Claims

1. A method for verifying an identity of a communicating terminal (TER) user, including:
a preliminary step comprising:
- communicating to at least one server (SER) dedicated to a service, first identity data (Id1) of the user (S10),
- generating a bi-key - public/private key pair - by the terminal,
- generating at the server second identity data (Id2) of the user (S11), the second data defining an identity derived from the user that is specific to the service, said second identity data being a digital certificate linking said public key to said first identity data, and
- storing the second identity data (Id2) in a secure memory (SIM) of the terminal (S12),
a current step of identity verification comprising:
- transmitting from the server to the terminal a token (C) to be signed (S21) in order to authorise or not an access to the service to which the server is dedicated,
- using in the terminal the private key at least to sign the token (S23), the signed token (C*) being transmitted to the server and verified at the server (S25), and
- in the case of a positive verification of the signed token at the server, the server validates the identity verification of the user of the terminal and authorises the access to the service;
wherein transmitting the token (C) to be signed and/or the signed token (C*), between the server and the terminal is performed via an equipment (PC) requesting access to the service to which the server (SER) is dedicated, the access to the service being conditioned by an identity verification of the user from the terminal of the user in said common step.

2. The method according to Claim 1, wherein, in the case of a positive verification, the signed token is linked to a digital identification certificate of the user.

3. The method according to any of the previous claims, wherein said communication to the server of the first identity data (Id1) of the user is authorised after verifying biometric data of the user of the terminal (S13).

4. The method according to any of the previous claims, wherein the current step includes verifying a piece of data that is specific to the user (S22) before initiating on the terminal the use of the second data for signing the token.

5. The method according to any of the previous claims, wherein a plurality of preliminary steps is provided with a plurality of communications to a plurality of servers of the first identity data of the user, each server generating second identity data of the user, respectively, each second data defining an identity derived from the user, each derived identity being specific to a service of which the access is conditioned by verifying the signed token in the server dedicated to said service.

6. The method according to any of the previous claims, wherein the communication to the server (SER) of the first identity data (Id1) is performed via a reader (LEC) including a short-range (NFC) or wireline communication module, and, the terminal including an equivalent short-range or wireline communication module, the second data (Id2) is transmitted from the server to the reader, and then from the reader to the terminal by short-range or wireline communication.

7. The method according to Claim 1, wherein transmitting the token (C) to be signed and/or the signed token (C*), between the terminal (TER) and the equipment (PC), is performed by short-range or wireline communication (NFC),
the terminal (TER) including a short-range (NFC) or wireline communication module and the equipment (PC) including an equivalent short-range or wireline communication module.

8. The method according to any of claims 1 to 6, wherein transmitting the token (C) to be signed from the server (SER) to the terminal (TER) is performed by a mobile network, and transmitting the signed token (C*) from the terminal to the server is performed via the equipment (PC) requesting the access to the service to which the server (SER) is associated.

9. The method according to any of claims 1 to 6, wherein transmitting the token (C) to be signed from the server (SER) to the terminal (TER) is performed via the equipment (PC) requesting an access to the service to which the server (SER) is associated, and transmitting the signed token (C*) from the terminal to the server is performed by a mobile network.

10. A system for verifying an identity of a user, including at least one terminal (TER) and one server (SER), and for implementing the method according to any of the previous claims.
